# EUROPEAN PATENT APPLICATION

(11) **EP 1 353 281 A1**
(43) Date of publication of application: **15.10.2003**
(21) Application number: 02388031.3
(22) Date of filing: 12.04.2002
(51) Int. Cl.: G06F 17/30

(54) **A method of providing feedback to a database**

(71) Applicant: Targit A/S, 9800 Hjorring (DK)
(72) Inventor: Middelfart, Morten, 9800 Hjorring (DK)
(74) Representative: Boesen, Johnny Peder

(57) **Abstract**

A computer-implemented method of processing a query to a database containing items, which database is connected to a user device and to an administrator device, which administrator device is accessible to an administrator of the database; the method comprising the steps of via the user device providing the user with the option to generate a query for items in the database (101), and retreiving data requested in the query from the database.

Moreover, via the user device providing the user with the further option to input a query relating to items not existing in the database; determining whether the query contains items not existing in the database (102), and if the query relates to items not existing in the database, registering information about these items, not existing in the database, in a list of pending items (105), and providing the list of pending items to an administrator device to thereby provide a list of items not existing in the database, but requested by a user in a query.

## Description

The present invention is directed towards the field of databases. More particularly, this invention relates to a computer-implemented method of processing a query to a database containing items, which database is connected to a user device and to an administrator device, which administrator device is accessible to an administrator of the database; the method comprising the steps of via the user device providing the user with the option to generate a query for items in the database; and retrieving data requested in the query from the database.

Databases of various types are central components in modern use of information technology. Databases can be of different types optimized for various purposes, but two main types can be, on the one hand, transactions databases, which are optimized for fast storage and retrieval time and, on the other hand, so-called data warehouses (eng.: data warehouse) which are optimized for analyzing the data stored in the database. Typically, data warehouses contain more redundant data than a transaction database. The present invention is primarily related to data warehouses but is not limited thereto.

In this description the term 'database' relates to any data warehouse or database, whether multi-dimensional or relational. The term 'item' is meant to cover fields or calculations on fields in a relational database, and in a multidimensional database it is meant to cover dimensions or measures. Additionally, the term 'item' can cover categories of text in free text databases, and in future types of with yet unknown indexing of the items therein, the term 'item' is meant to encompass new categorizations of data.

In present databases queries about data items, which are not contained in the database will give no result or will lead to an error message. The users desiring data about items, which are not contained in the database, are left without having accomplished their object.

It is a problem with the known databases that queries for items, which do not exist in the database, result in error messages or in no result at all. This leads to unsatisfied users and excessive time consumption. Present systems also do not improve during use. Many users can make the same queries for items not existing in the database and they can get the same error messages or not results at all - and this during long periods of time - without any improvement in the system at all. Additionally, limitations imposed on users of a database due to lack of items in the database in providing a presently desired report can be very frustrating for the users. However, this problem is not solved in the prior art since these limitations actually are the key to guide the user to a valid query.

This problem is solved when the method mentioned in the opening paragraph is characterized in that the method further comprises the steps of via the user device providing the user with the further option to input a query relating to items not existing in the database; determining whether the query contains items not existing in the database, and if the query relates to items not existing in the database, registering information about these items, not existing in the database, in a list of pending items; and providing the list of pending items to an administrator device to thereby provide a list of items not existing in the database, but requested by a user in a query.

Consequently, the system can register items requested by a user as a result of the user entering such new items not existing in the database instead of merely sending an error message or alternatively binding the user to prespecified query options. Thereby, the users can contribute to the future improvements of the database simply by incorporating requests for new items into queries they would like to query the database with to subsequently receive a desired report.

According to a preferred embodiment of the invention the method further comprises appending a new item to the database based on the list of pending items. This gives the possibility of in a time saving and thus cost saving manner to update the database, so that the database corresponds to the user demands. Hereby, the database can again improve during use.

Preferably, the method comprises that step of: if the query relates to items not existing in the database, sending a message after processing the query with information, that the query relates to items not existing in the database and/or that the query has been registered in a list of pending items.

Preferably, the administrator who has access to the list of pending items via the administration device is provided with the option of appending new items to the database and/or editing the list of pending items. Consequently, the administrator can edit the list when the changes to the database have been made.

In a preferred embodiment, the method further comprises the step of providing query components for selection by a user, which query components constitute parts of a query; combining selected query components to generate a partial query; providing a field on a user interface of a user device to allow a user to enter a desired query component which relates to items not existing in the database; and combining the partial query with the desired query component that was entered, thereby forming a query with items requested by the user.

When a user would like to ask for information, which does not exist in the database, he does this by specifying the non-existing query components along with the existing ones. The desired query components are kept in the list of requested items to distinguish them from the existing items. Thereby, the query can be performed in a structured and systematic way combining existing query components and a new requested component.

Examples of query components could be criteria regarding formats, sorting and/or presentation of data, subjects, fields, that is criteria regarding limitation of the query in general. This can be done in SQL, MDX or other query languages well known in the art.

In a preferred embodiment the provision of query components is effected in a user interface on the user device by means of check boxes, drop down lists, point and click buttons or a field for entering text.

Preferably, the method further comprises the step of providing the items in the list of pending items for selection by different users. Thereby the users can view the requests of other users and can choose the same items as other users making selection faster and more user friendly. This enhances avoiding multiple words for the same items, e.g. spelled differently or with different use of small and capital letters, which in turn clarifies the user demands further, giving the administrator the optimal overview of the user demands. The list of pending items could e.g. be shown to the user on the user interface by means of drop down lists.

Preferably, registering information about items not existing in the database comprises registering a frequency of requests in queries by different users for this item. Thereby the administrator is able to get a fast overview of the user requests and e.g. the most frequent requests can be handled first.

With the vast use of the Internet it has become common, that users from all over the world can access databases via the Internet. In multi-national organizations, that have a number of members with different languages the communication in only one language, i.e. English, could be troublesome for some of the members. It would therefore be desirable for the users to be able to make queries in their own language, such that the method to make queries would be supported in a multitude of languages.

In a preferred embodiment wherein items in the database conform to a base language and references to items in the query conform to a user language, which can be different from the base language; the method further comprising the steps of: translating the query in a user language to the base language; processing the query; and translating items in base language and to be transmitted to the user, to a preferred language of user.

Thereby the user can perform database searches in a preferred language enhancing the user friendliness of the database excessively. Since the list contains all previous new items pending to be included in the database, these items are presented in the user's own language based on the process described above. When another user using another language activates the list of requested items, it will be presented in the user's preferred language. This will reduce the risk that two or more items meaning the same are submitted in parallel.

Preferably, the method further comprises registering at least a portion of the information about the items not existing in the database in the base language; translating the information that is represented in the base language in the list of pending items into a selected user language which differs from the base language; and showing the list of pending items to a user, wherein the portion of the information in the base language is shown in the user language.

Preferably, translation is performed by means of a translation service and is supported by a cache memory, where previous translations are stored in a "one word"-to-"one word" relationship between base language and user language.

In a preferred embodiment the translation service is local and/or remote to the database and is accessible via a network connection.

In a preferred embodiment any message relating to the result or the status of a query is transmitted to the user in a preferred user language, if necessary succeeding a translation from the base language to the user language.

Moreover, the invention relates to a computer readable medium encoded with a program for implementing the method when run on a computer; a computer system comprising a database and a computer being programmed to carry out the method; and a propagated signal carrying instructions for implementing the method when executed on a computer.

These and other aspects of the invention will be apparent from and elucidated with reference to a preferred embodiment and with reference to the drawing, in which:
Fig. 1 shows a first flowchart of a method of processing a query to a database;
Fig. 2 shows a block diagram of the invention;
Fig. 3 shows a flowchart of maintaining a list of presently requested items;
Fig. 4 shows a second flowchart of a method of processing a query to a database;
Fig. 5 shows a first user interface of a client system; and
Fig. 6 shows a block diagram of the invention containing a translation service.
Throughout the figures, like numerals designate like elements.

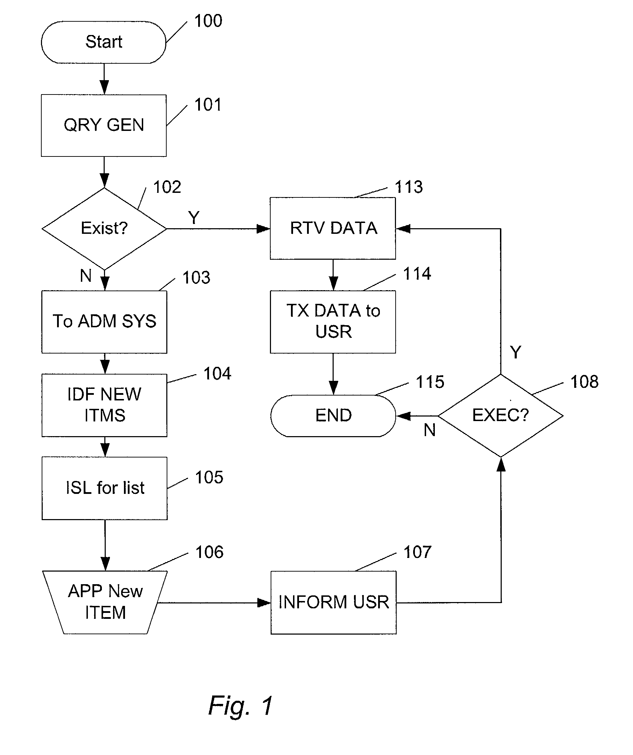

Fig. 1 shows a first flowchart of a method of processing a query to a database starting up in step 100. In step 101 a user generates a query to a database. It is determined, step 102, whether the query relates to items, which do exist in the database. If this is the case, the flow is routed to step 113, where data, which is requested in the query, is retrieved from the database. These data are transmitted to the user in step 114 and the flow ends, step 115.

If, on the other hand, it is determined in step 102, that the query relates to items, which do not exist in the database, the flow is routed to an administrator system, step 103. This administrator system is accessible to a human administrator of the database. Subsequently, the item(s) in the query, which do(es) not exist in the database, is/are identified, step 104. This/these item(s) is/are referred to as (a) new item(s) and is/are subsequently isolated for listing, step 105. Determining whether the query contains items not existing in the database can be carried out be comparing items referred to in the query with items in the database, for instance by consulting an available data model of the database or the database itself. The new items are preferably identified in the query by means of properties, codes or tags inserted upon the user inputting a query relating to items not existing in the database and/or in response to a user interface event e.g. a so-called click-event. Hence, parsing the query to find codes, tags or properties inserted in the query can isolate the new items.

Additionally, the new item(s) can be shown emphasized in the context of a complete or partial query by means of writing the items with distinctive colouring or matter of writing, e.g. in italics, bold, underscored. This could be implemented as a so-called keyword-in-context (KWIC) feature. This can provide the administrator with a better understanding of the request for new items.

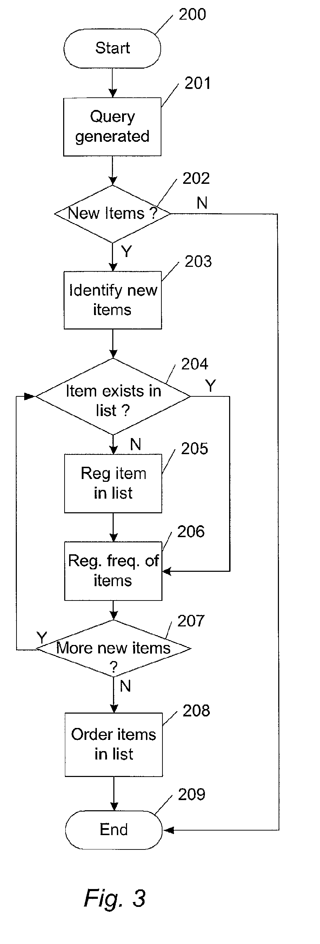

The new items are kept/registered in a list of pending items, which can be accessed by an administrator of the database. This list can be in form of e.g. an alphabetic list and is explained in more details with reference to fig. 3. In this list the administrator can view the items, which the users want information about in the database and in this way he can quickly get information about user requirements without having to make surveys among the users. On the basis of this list the administrator decides, which new items should be appended in the database. In step 106, the administrator performs the appending of new items in the database, which is known per se in the state of the art. Next, a message is sent, step 107, to the user(s), who had asked for the new item, irrespective of whether the item had been appended or not. If the administrator has decided not to append the item in the database, the user is informed of this, and if he has decided to append the item in the database, the user is informed, that the item has been appended. The message can also contain information that the query has been routed to an administrator system for further processing or other information e.g. a target data for inclusion in the database.

Thereafter it is decided, step 108, whether the original request for data related to the new item in the database should be executed or not. The result of this decision is of course "no" in case of items, which have not been appended in the database. In cases, where the new item has been appended in the database, but information regarding this new item has not has been fully registered in the database, the flow can also be routed directly to the end, step 115. If information is stored about the new item in the database, the flow can continue to retrieve data in the database, step 113, and to transmit these data to the user, step 114, before going to the end, step 115.

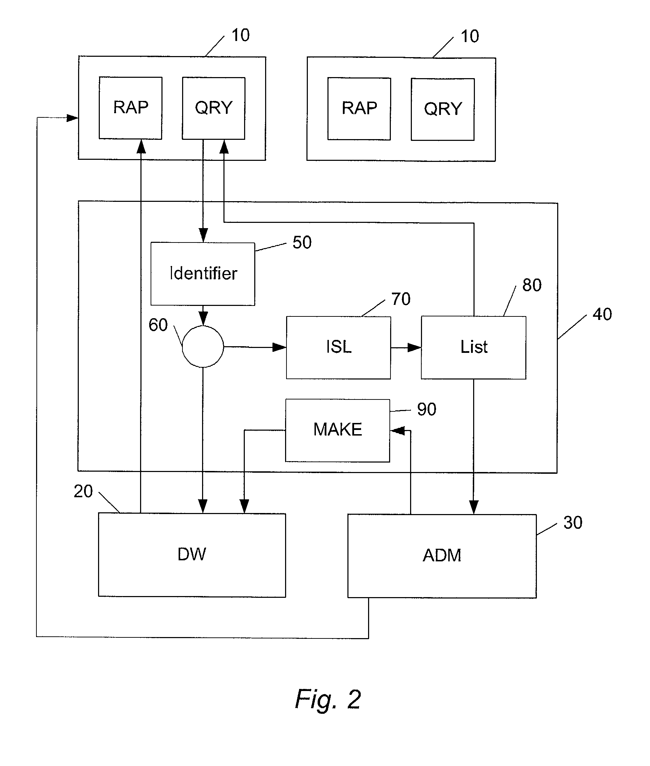

Fig. 2 is a block diagram of an embodiment of the invention supporting one or more users 10. For the clarity of the description only two users 10 are shown, but it should be understood, that substantially any number of users could be involved. The numeral 40 refers to a middle layer between the user(s) on one side and the database 20 and/or the administrator 30 on the other side. A user makes a query containing one or more items and the parts of the query relating to items not existing in the database are identified, step 50, which per se is well known in the art. Thereafter the query is routed, step 60, according to whether it contains new items or not. If it does not contain new items, the query is routed to the database 20, where it is processed, whereupon a report with the result is generated and sent to the user. This report contains the result of the query in an appropriate form.

If the query relates to items not existing in the database, instead of being routed to the database, those parts of the query relating to new items are isolated, step 70, and listed in a list, step 80, to which the administrator has access, step 30. On the basis of the list the administrator decides, whether the new items in the list should be appended to the database, as described above. If the administrator decides, that an item in the list of new items should not be appended to the database, a message is sent to the user stating that his desired new item will not be appended. This message can be an automatically generated standard message or the administrator can generate a message, e.g. also stating why the item will not be generated. For the items, that the administrator has decided should be generated, 90, the route continues to the database, 20, where the new items are appended in the database in a way per se known in the art. Thereafter a message is sent to the user stating that the new item has been appended in the database.

The message may also contain other information, e.g. the result of the user's original query about the new item.

Fig. 3 shows a flowchart of an example of a process of maintaining a list of presently requested items with a registered frequency of requests for each item in the list. It is presumed, that such a list exists and that it is ordered in an appropriate way. This ordering could e.g. be alphabetically, by frequency, in order of appearance, in order of the user requesting the items by user ID.

The flow starts in step 200; in step 201 a user generates a query. In step 202 it is determined, whether the query relates to new items, i.e. items, which yet do not exist in the database. If the query do not relate to new items, the flow is ended, step 209. In the opposite case, the flow continues to step 203, where the new items are identified. When one ore more items in the query do not exist in the database, it is for each of these new items determined, step 204, whether it already exists in the list of presently requested, new items. If this is the case, the flow continues to step 206, where the frequency of requests for that item is increased by one. In the other case the item is registered as an item in the list, step 205, with zero frequency and in step 206 the frequency for the item is increased by one. Step 207 determines whether more new items are requested in the query and the flow returns to step 204, if this is the case. Otherwise the list is complete with regard to the query containing new requested items and in step 208 the list is reordered. This reordering step is only necessary, if new items have been added to the list of presently requested, new items. If no new items have been added, but the registered frequency of requests for an item has been changed, this reordering step can be omitted.

The list can be viewed by the administrator, on the basis of which he decides whether to append new items in the database. Preferably, also the users have access to the list. This can be an advantage in the generation of a query containing new items, in that the users can view the already requested items and choose between them, which can make generation of a query faster. It has also the advantage of avoiding duplicate appearances in the list owing to misspellings or alternative spellings of the same word. The list of requested items could be ordered alphabetically, by frequency, in order of appearance, in order of the user requesting the items by user ID and/or in any other convenient way.

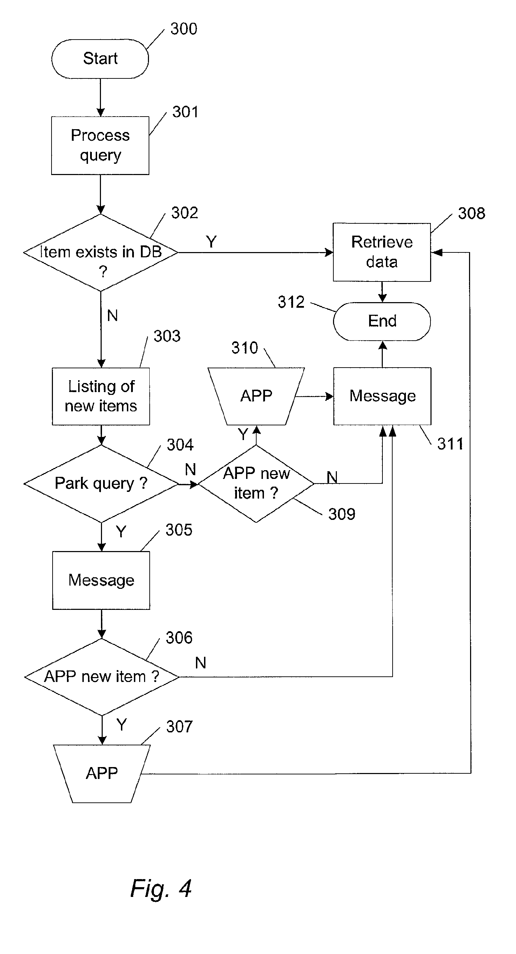

Fig. 4 shows a second flowchart of a method of processing a query to a database starting up in step 300. In step 301 a user generates a query to a database. It is determined, step 302, whether the query relates to items, which do exist in the database. If this is the case, the flow is routed to step 308, where data, which is requested in the query, is retrieved from the database and transmitted to the user in an appropriate form, and the flow ends, step 312.

If, on the other hand, it is determined in step 302, that the query relates to items, which do not exist in the database, these items are registered in the list of new items as described above in relation to fig. 3, step 303. Thereafter, it is decided, step 304, whether the query should be parked, i.e. stored for later processing. If this is the case, a message can be sent, step 305, to the user, e.g. stating, that the query is parked and that the user will be informed about the subsequent processing of the query, whenever this processing has taken place. In step 306 it is determined by the administrator, whether to append the new item in the database or not. If the administrator decides to append the new item, he does this in step 307, whereupon the flow continues to step 308 to retrieve data from the database and transmit the result of the query to the user. This finishes the route, step 312. If the administrator in step 306 decides not to append the requested item in the database, a message is sent, step 311, to the user, who generated the query containing the new item, with information that the requested item will not be generated in the database, and the flow ends, step 312.

In step 304, if it is decided, that the query should not be parked, the route continues to step 309. Again, it is determined by the administrator, whether to append the new item in the database or not. If the administrator decides to append the new item, he does this in step 310, whereupon a message can be sent to the user, step 311. This message should only contain information that the requested item has been appended in the database and thus no information regarding the information in the database relating to the new item. Thereupon the flow is ended, step 312. If the administrator in step 309 decides not to append a requested, new item in the database, a message is sent to the user, who generated the query containing the new item, step 311. This message could contain information that the requested item will not be generated in the database, and the flow ends, step 312.

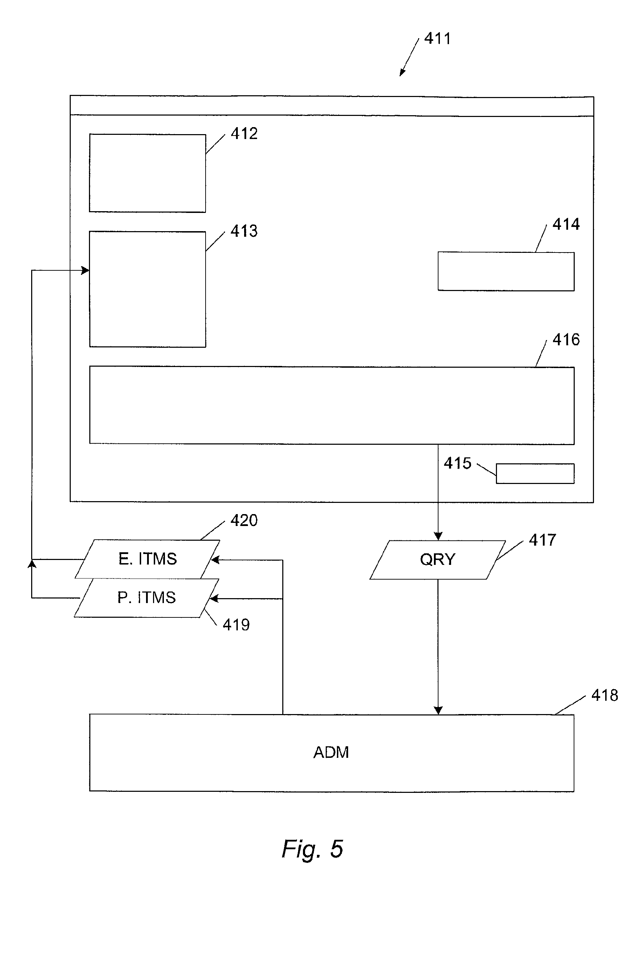

Fig. 5 shows by way of non-limiting example a user interface 411 of a client system. Traditionally, information is extracted from databases by submitting structured queries in some form of language with a well-defined syntax and semantics. These queries contain so-called query components, i.e. parts, which contain information about the requested item and which together form the query. The user interface according to the invention supports creation of queries by means of fields 412-416. In the fields 412, 413 the user can choose available options; some options are based on previous choices. The field 413 can e.g. contain lists of existing items and/or the list of presently requested items in the database. The fields 412, 413 contain options to search in the database, e.g. names, titles, units, numbers, according to the items in the database. During the selection of options, which can constitute query components of the query, the user can see the current query in a field 416. According to one embodiment of the invention, the interface can support the generation of the query in a natural, human language. The user can be presented with predetermined parts of an incomplete sentence, for example *"I would like to create a report.."* and by selecting various options, phrases are added, until a full paragraph is constructed describing all details about the desired database search, and this paragraph is shown in the field 416 on the user interface. The phrases can be added in any sequence and the paragraph can be changed by editing or removing query components. Other examples of incomplete sentences to be chosen could be "*with the title*..", *"The information on the report should be grouped by ...", "The report should be formatted with..".* It is understood that these examples are non-limiting examples and that many other types are conceivable. The incomplete sentences are shown in the field 412, and the items to choose between are shown in the field 413. The provision of query components could be effected in the user interface by means of check boxes, drop down lists, point and click buttons or a field for entering text or in any other convenient way. In the above, a way of forming a structured query by means of text is explained. It is also possible to form a structured query by letting the user choose between different presentation ways, e.g. a graph, a table, a diagram, a bar chart, and thereafter letting him indicate the items to be shown in the selected presentation form, e.g. by means of drop down boxes with text, and eventually the formats or other requirements of how to show the data on the user interface. Of course other ways of forming structured queries are conceivable, too.

If the user wants to ask for information, which not yet is present in the database, this is done by activating a field 414 in the user interface, specifying that a query component, which does not exist in the database, is sought and thereafter typing in the specific requested item. As described in relation to figure 3 this query component is added to the list of requested items. This list can be presented in the field 413. So either a user could choose an item existing in the database, choose one of the requested items, which are not yet added to the database, and thereby increase the frequency for that requested item by one or he could add a new item by activating the field 414 and inputting his request for a desired item. In the field 413 the existing items and the requested, but not yet existing items should be shown in different ways, for example in different colours or fonts, to make the user able to distinguish easily between them.

Activation of a field 415 on the user interface submits the requested database search relating to the query generated in the field 416. If the query contains items not existing in the database, it is directed to the administrator 418. In the opposite case, i.e. the query only relates to items already existing in the database, the query is directed to and processed in the database (not shown). The administrator system can automatically update the list of requested items, and the data regarding these pending items, 419, are used in the field 413 together with data regarding existing items, 420. On the basis of the query the administrator determines which requested items should be generated. When the administrator decides to generate an item in the database on the basis of the list of requested item, this item is moved from the list of requested items to the list of items existing in the database.

Hence, it is described how a user is provided with an option to input a query relating to items not existing in the database.

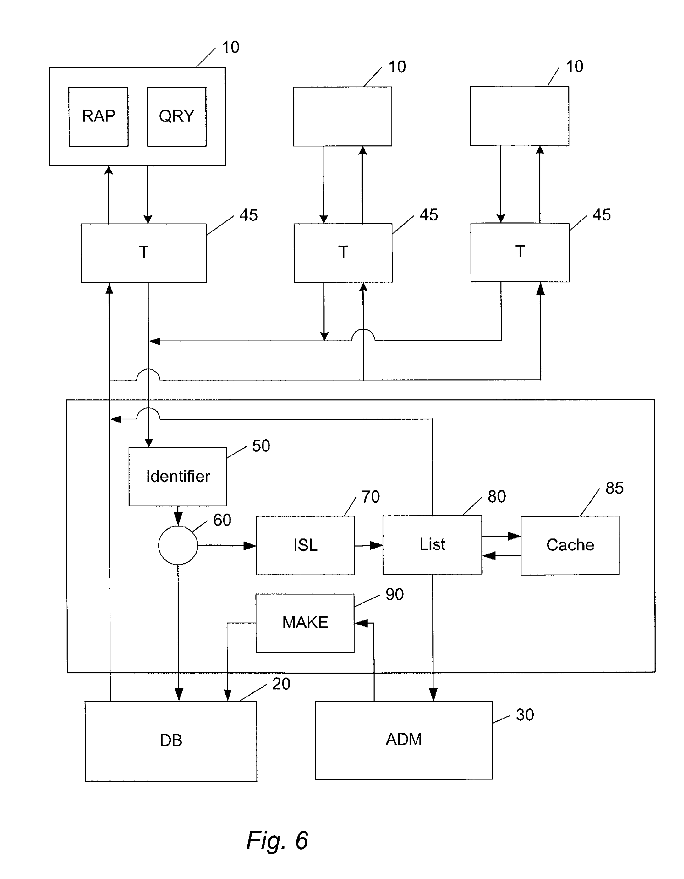

Fig. 6 shows by way of non-limiting example a block diagram of the invention containing a translation service and supporting a multitude of users. For the sake of clarity only three users 10 are shown, but it should be understood, that substantially any number of users could be involved. The method according to the invention supports use in more than one language. The items in the database conform to a base language and references to items in the query conform to user languages, which in this example are different from the base language. A user 10 makes a query in his language, the user language. This query is translated 45, T, into the base language, whereupon the query is processed in 50-80, 30, 90 and 20, essentially as described in relation to fig. 2. The reporting from the database 20 is routed through the translation service 45 for translations to the user language. The user languages of the different users 10 can be different and the translation 45 of the reporting from the database 20 will naturally be into the same user language as the one in which the query was generated. It should be noted that the term "reporting" is meant to cover all kinds of messages relating to the database search, i.e. the result of the database search, messages regarding the status of the database search, etc. Examples on the status of the database search could be, that the request is rejected, pending or granted.

The list of requested items, which yet do not exist in the database, is maintained in the base language. Thus requests for new items in other languages than the base language is translated 45 to the base language. Thereby, the risk that two or more requested items meaning the same are submitted in parallel is substantially alleviated. Said list will be shown to the users as described in relation to fig. 3 and 4 by translating 45 the list into the different user languages. Thus, a multitude of users can view the same list in their preferred user language.

Preferably, the translation is supported by a cache memory 85, where used translations are stored in a one-to-one relationship between base language and user languages to avoid ambiguities to arise during the translation. Especially, the list of pending items can be stored in the cache memory with corresponding translations into user languages, so that the items in the list of pending items are kept and updated in the base language only and have translations into the user languages. Thus, the request for a new item in the database in one user language can be seen by other users in other user languages, thus avoiding multiple requests for the same items in different languages.

The translation service can be local or via an intranet or the Internet. Of course, to use a translation service via an intranet or the Internet, the user equipment should be equipped with the necessary means to be connected thereto, e.g. a modem. Any message relating to the result or the status of a query is transmitted to the user in his preferred user language, so that the user has the experience, that he can use the database totally in his own language, i.e. he makes queries in his preferred language, and he receives messages and results in the same language as the query.

Table 1 shows an example of a part of a cache memory. In this example the base language is English and the user language is German. The translation is performed from English (the base language) to German (the user language). As shown in Table 1 the two words "Brownies" and "Cookies" has the same translation in German. Therefore an index number is attached to the second translation to make sure, that all translations are one-to-one, i.e. that no words in the base language can have the same translation in the user language. The column "Date stamp" contains information regarding the date of storage of the translation relation, which information can be used in decisions regarding how long the translation relations are kept in the cache memory. For instance it can be decided to prune words away from the extended set of words if said words have not been included in any query or result from a query for a certain amount of time, e.g. a month, a week, etc.

**Table 1**

| below shows an example of a part of a cache memory | | | |
|---|---|---|---|
| Base language: English | User language | Translation into user language | Date stamp |
| Bakery | German | Bäckerei | 2000-04-05 |
| Dairy | German | Molkerei | 2000-04-05 |
| Brownies | German | Plätzchen | 2000-04-06 |
| Cookies | German | Plätzchen-2 | 2000-04-05 |

A rewording of a query in the user language, German, into the base language, English, can be performed on the basis of the translation relation in the cache memory as in Table 1.

Another possibility is to include information regarding the frequency of use of words in the cache memory and to prune away all words from the extended set of words except for the most used part of words, which part can be substantially any percentage of the extended set of words. This percentage will typically be set by an administrator of the database or by the user

It is understood that a skilled person may adapt the above embodiments, e.g. by adding or removing features, or by combining features of the above embodiments.

In a preferred embodiment the invention is implemented as a middle-layer software component (described in detail above) on a server computer that is connected to a database and that is connected to at least one client computer. Software components on the client computer is arranged to provide for the interaction with the user(s) or administrator(s) as also described in detail above. The database, the server computer and the client computer can be interconnected by means of a data network e.g. Local Area Network or Wide Area Network.

The middle-layer software component can be implemented as a server program capable of communicating via a data network with the database and the client devices.

The memory (including the cache memory) may include magnetic tape, optical disc, digital video disk (DVD), compact disc (CD or CD-ROM), mini-disc, hard disk, floppy disk, ferro-electric memory, electrically erasable programmable read only memory (EEPROM), flash memory, EPROM, read only memory (ROM), static random access memory (SRAM), dynamic random access memory (DRAM), synchronous dynamic random access memory (SDRAM), ferromagnetic memory, optical storage, charge coupled devices, smart cards, PCMCIA card, etc.

Input means for receiving input from a user and/or an administrator may comprise a keyboard, a keypad, a button and or an arrangement of buttons, a touch screen, a pointing device, such as a mouse, a trackball, a touch pad, a digital pen, or the like. Input means may further comprise other forms of man-machine interfaces, such as a voice interface, or the like.

Output means for providing output to a user and/or an administrator may comprise a display device, such as a monitor, a liquid crystal display, a cathode ray tube to display a graphical user interface or another man-machine interface. Alternatively or additionally, the output means may comprise an audible output device, such as a sound card and or a speaker.

Processing means for executing a program or software component implementing the invention may include a microprocessor, an application-specific integrated circuit, or another integrated circuit, a smart card, a general purpose computer adapted by suitable software, or the like.

A computer readable medium may be magnetic tape, optical disc, digital videodisc (DVD), compact disc (CD or CD-ROM), mini-disc, hard disk, floppy disk, smart card, PCMCIA card etc.

## Claims

1. A computer-implemented method of processing a query to a database containing items, which database is connected to a user device and to an administrator device, which administrator device is accessible to an administrator of the database; the method comprising the steps of:
via the user device providing the user with the option to generate a query for items in the database;
retrieving data requested in the query from the database;
**characterized in that** the method further comprises the steps of:
via the user device providing the user with the further option to input a query relating to items not existing in the database;
determining whether the query contains items not existing in the database, and if the query relates to items not existing in the database, registering information about these items, not existing in the database, in a list of pending items; and
providing the list of pending items to an administrator device to thereby provide a list of items not existing in the database, but requested by a user in a query.

2. A method according to claim 1, further comprising the step of:
appending a new item to the database based on the list of pending items.

3. A method according to claims 1-2, further comprising the step of: if the query relates to items not existing in the database, sending a message after processing the query with information, that the query relates to items not existing in the database and/or that the query has been registered in a list of pending items.

4. A method according to claims 1-3, wherein an administrator who has access to the list of pending items via the administration device is provided with the option of appending new items to the database and/or editing the list of pending items.

5. A method according to claims 1-4, further comprising the steps of:
providing query components for selection by a user, which query components constitute parts of a query;
combining selected query components to generate a partial query;
providing a field on a user interface of a user device to allow a user to enter a desired query component which relates to items not existing in the database; combining the partial query with the desired query component that was entered, thereby forming a query with items requested by the user.

6. A method according to claim 5, wherein the provision of query components is effected in a user interface on the user device by means of check boxes, drop down lists, point and click buttons or a field for entering text.

7. A method according to claims 1-6, further comprising the step of:
providing the items in the list of pending items for selection by different users.

8. A method according to claims 1-7, further comprising the step of:
sending a message to the user with information of the status of an item in the list of pending items.

9. A method according to claim 8, wherein the status is that the request is rejected, pending or granted.

10. A method according to claims 1-9, wherein registering information about items not existing in the database comprises registering a frequency of requests in queries by different users for this item.

11. A method according to claim 10, wherein the list of requested items is ordered alphabetically, by frequency, in order of appearance, in order of the user requesting the items and/or by user ID.

12. A method according to claim 1-11, wherein items in the database conform to a base language and references to items in the query conform to a user language, which can be different from the base language; the method further comprising the steps of:
translating the query in a user language to the base language;
processing the query; and
translating items in base language and to be transmitted to the user, to a preferred language of user.

13. A method according to claims 1-12, further comprising:
registering at least a portion of the information about the items not existing in the database in the base language;
translating the information that is represented in the base language in the list of pending items into a selected user language which differs from the base language; and
showing the list of pending items to a user, wherein the portion of the information in the base language is shown in the user language.

14. A method according to claims 11-13, wherein translation is performed by means of a translation service and is supported by a cache memory, where previous translations are stored in a "one word"-to-"one word" relationship between base language and user language.

15. A method according to claims 11-14, wherein the translation service is local and/or remote to the database and is accessible via a network connection.

16. A method according to claims 11-15, wherein any message relating to the result or the status of a query is transmitted to the user in a preferred user language, if necessary succeeding a translation from the base language to the user language.

17. A computer readable medium encoded with a program for implementing the method as set forth in any of claims 1 through 16 when run on a computer.

18. A computer system comprising a database and a computer being programmed to carry out the method as set forth in any of claims 1 through 16.

19. A propagated signal carrying instructions for implementing the method as set forth in any of claims 1 through 16 when executed on a computer.
